# EUROPÄISCHE PATENTSCHRIFT

(11) **EP 3 669 818 B1**
(45) Veröffentlichungstag und Bekanntmachung des Hinweises auf die Patenterteilung: **11.05.2022**
(21) Anmeldenummer: 18214891.6
(22) Anmeldetag: 20.12.2018
(51) Int. Cl.: A61C 13/00, A61C 13/09

(54) **DENTALER MEHRFARBEN-FRÄSROHLING**
DENTAL MULTICOLOUR GRINDING BLOCK
ÉBAUCHE MULTICOLORE DENTAIRE

(43) Veröffentlichungstag der Anmeldung: 24.06.2020
(73) Patentinhaber: Ivoclar Vivadent AG, 9494 Schaan (LI)
(72) Erfinder: Hagenbuch, Konrad, 9469 Haag (CH); Häfele, Clemens Andreas, 6800 Feldkirch (AT); Lanbacher, Karl, 39023 Laas (IT); Mitterhofer, Martin, 39021 Latsch (IT); Sprenger, Dirk, 99846 Drei Gleichen (DE)
(74) Vertreter: Baronetzky, Klaus

(56) Entgegenhaltungen:
- EP-A1- 2 915 503
- EP-A1- 3 053 541
- EP-A1- 3 064 170
- EP-A1- 3 597 144
- EP-B1- 3 053 541
- WO-A1-2015/187422
- WO-A1-2018/073273
- WO-A1-2019/035467
- WO-A1-2020/025795
- DE-A1-102011 055 393
- US-A1- 2013 101 962

## Beschreibung

Die Erfindung betrifft einen dentalen Mehrfarben-Fräsrohling, gemäß dem Oberbegriff von Anspruch 1 sowie ein Dentalrestaurationsteil, gemäß dem Oberbegriff von Anspruch 13.

Es ist seid langem bekannt, für die Bereitstellung von Zähnen Fräsrohlinge zu verwenden, die entweder in Blockform oder in Scheibenform vorliegen, oder alternativ entsprechende Zähne additiv aufzubauen.

Die Herstellung kann entweder auf Kunststoff, auf Komposit oder auf Keramik basieren und strebt an, den ästhetischen Eindruck natürlicher Zähne zu simulieren.

Natürliche Zähne sind u.a. aus Dentin aufgebaut, das von einer Schicht mit Zahnschmelz bedeckt ist. Die Schichtdicke des Zahnschmelzes ist unterschiedlich, und durch die Transparenz des Zahnschmelzes wirkt sich die Gestaltung des Dentins auf den optischen Eindruck aus.

Bei der Nachbildung künstlicher Zähne wird daher typischerweise ein entsprechender Schichtaufbau gewählt, so dass eine transparentere Zahnmaterialschicht mit einer weniger transparenten Zahnmaterialschicht hinterlegt ist.

Was die Herstellung von Zähnen aus Kunststoff angeht, kommen sowohl hochvernetzte als auch niedrigvernetzte Materialien zum Einsatz. Bei niedrigvernetzten Materialien lassen sich auch Farbübergänge zwischen den Schichten realisieren.

Bei derartigen Kunststoffen ist die Dauerhaltbarkeit allerdings ungünstig, so dass diese Materialien eher für provisorische Restaurationsteile in Betracht kommen.

Bei höhervernetzten Kunststoffen wird typischerweise zur Simulation der Farbverläufe mit graduellen Farbverläufen mit einer Vielzahl einzelner, und unterschiedlich eingefärbter Schichten gearbeitet.

Die Farbunterschiede und die Opazitätunterschiede zwischen den einzelnen Schichten sind vergleichsweise gering, und für eine einigermaßen optisch befriedigende Restauration ist es erforderlich, 5 oder mehr Schichten des Fräsrohlings vorzusehen.

Typischerweise weisen Rohlingscheiben einen Durchmesser von etwa 100 mm und eine Höhe von etwa 20 mm auf. Bei beispielsweise 8 Schichten unterschiedlicher Opazität und Farbintensität ist es auch möglich, durch Wahl der geeigneten Höhenlage einen helleren oder einen dunkleren Zahn bereitzustellen.

Wenn der Zahn nach ganz unten hin, also zum Dentinmaterial hin, verlagert ist, fehlt jedoch die Transparenz der Schneidematerial-Charakteristik, und wenn er nach ganz oben hin, also zum Schneidematerial, verlagert ist, fehlt die Dentinmaterial-Charakteristik, so dass derartige Lösungen ästhetisch unbefriedigend sind. Wenn ein vergleichsweise kleiner Zahn hergestellt werden soll, lässt sich die gewünschte Abdeckung mit mindestens 3 Schichten häufig nicht realisieren.

Zudem ist das Schichten von sehr vielen Schichten aufwendig und auch fehleranfällig.

Aus der DE 10 2011 055393 A1 beispielsweise ist eine Rohlingscheibe bekannt, die aus mindestens zwei Schichten, die wiederum aus verschieden pigmentierten Materialien aufgebaut werden, bestehen sollen. Die Grenzschicht zwischen den verschieden pigmentierten Materialien soll wellenförmig verlaufen, um einen "harten" Übergang zwischen den beiden optisch verschiedenen Materialien zu vermeiden. Zwar kann mit der Strukturierung der Grenzschicht der Farbübergang verbessert werden, aber das Ergebnis ist im Vergleich zu dem natürlichen Erscheinungsbild eines menschlichen Zahnes noch unbefriedigend.

Auch die WO 2019/035467 A1 wbeschreibt eine Rohlingscheibe, bei der zwei Schichten aus verschiedenen Materialien miteinander verbunden sind, wobei an der Grenzschicht zwischen den beiden Schichten (Zahn- und Gingivamaterialschicht) eine Struktur vorgesehen ist, die aus quader-oder kugelfömigen Erhebungen der einen der beiden Schichten besteht. Das für die weiter oben erwähnte Druckschrift trifft durch die recht einfache geometrische Form der dreidimensionalen Struktur an der Grenzschicht auf diese Druckschrift in gleicher Weise zu.

Ein Mischen der Materialien ist bei hochvernetzten Kunststoffsystemen nicht möglich, da die Materialien in der Regel eine teigartige Konsistenz aufweisen, so dass die Realisierung eines Fachgradienten nicht möglich ist.

Es ist auch bereits vorgeschlagen worden, einen Übergangsbereich vorzusehen, in dem sowohl Material der 1. Schicht als auch der 2. Schicht vorliegt. Derartige Lösungen haben sich noch nicht durchgesetzt, nachdem sich hierdurch die Anzahl der erforderlichen Schichten nicht reduzieren ließ, und nachdem gerade bei Zähnen mit einer geringen Opazität, also mit transparentem Schmelzmaterial, die Anmutung des Zahns unbefriedigend war.

Demgegenüber liegt der Erfindung die Aufgabe zu Grunde, einen Mehrfarben-Fräsrohling gemäß dem Oberbegriff von Anspruch 1 sowie ein additiv hergestelltes dentales Mehrfarben-Restaurationsteil zu schaffen, die ästhetisch deutlich befriedigender sind, wobei insbesondere die Anzahl der erforderlichen Schichten reduzierbar ist und die Eignung auch für Permanent-Dentalrestaurationsteile gegeben sein soll.

Diese Aufgabe wird erfindungsgemäß durch Anspruch1 beziehungsweise 13 gelöst. Vorteilhafte Weiterbildungen ergeben sich aus den Unteransprüchen.

Erfindungsgemäß ist es vorgesehen, im Übergangsbereich zwischen den beiden Schichten eine besondere dreidimensionale Übergangsgeometrie zu realisieren, bei der Rundflächen vorgesehen sind, die in beide Erstreckungsrichtungen der beiden Schichten weisen. Die Rundflächen sind konvex, aber auch konkav und erstrecken sich über Berge und Täler in mehrdimensional abwechselnder Weise. Ein Berg ist in beide Erstreckungsrichtungen von Tälern umgeben. Zwischen den Bergen und Tälern erstrecken sich Hänge, die ebenfalls in alle Richtungen weisen, schräg zur Erstreckungsebene der Schichten.

Diese Lösung ergibt überraschend ein ästhetisch so befriedigendes Ergebnis, und zwar sowohl bei hellen als auch bei dunklen Zähnen, dass mit lediglich 2 Schichten gearbeitet werden kann. Dies vereinfacht die Realisierung sowohl des Fräsrohlings als auch des entsprechenden additiv hergestellten Restaurationsteils erheblich.

Die Verwendung von hochvernetztem Kunststoff für die Materialien ist erfindungsgemäß vorgesehen, so dass eine gute Dauerhaltbarkeit gegeben ist.

Die erfindungsgemäßen Rundflächen sind dreidimensional gewölbt, also weisen eine Krümmung auf, die sich in unterschiedlicher Raumrichtungen gleichzeitig erstreckt.

Ein Beispiel für eine derartige Krümmung ist ein Halbtorus. Dieser weist in eine Raumrichtung betrachtet eine Halbkreisform auf, und in die andere Raumrichtung betrachtet eine Kreisform. Die Oberfläche ist in 2 Raumrichtungen gekrümmt und bildet insofern Rundflächen aus, die sich in mehrere Erstreckungsrichtungen der Schichten krümmen.

Überraschend ergeben die erfindungsgemäß besonders gekrümmten Rundflächen die erwünschte ästhetische Wirkung und erlauben es, mit einer deutlich verminderten Anzahl von Schichten auszukommen, beispielsweise lediglich 2 oder 3 Schichten.

In vorteilhafter Ausgestaltung sind die Rundflächen mind. teilweise elliptisch ausgestaltet.

Offenbar trägt hierzu die stochastisch gleichverteilte Verteilung der Brechungswinkel beziehungsweise Reflexionswinkel an der Grenzfläche zwischen den Schichten bei.

Bevorzugt sind die beiden betrachteten Schichten formschlüssig miteinander verbunden, beispielsweise auch durch thermische Behandlung mindestens einer der Schichten beim Aneinanderfügen der Schichten des Fräsrohlings, oder beispielsweise durch Aufschmelzen beim additiv hergestellten Dentalrestaurationsteil.

Erfindungsgemäß ist es günstig, dass der erwünschte Farbübergang in gleicher Weise bei großen und bei kleinen Zähnen optisch in Erscheinung tritt, nachdem mit lediglich einem Farbübergang das erwünschte ästhetische Ergebnis erzielbar ist.

Es versteht sich, dass die Lage der Grenzfläche innerhalb der Dentalrestauration in weiten Bereichen an die Erfordernisse anpassbar ist. Wenn ein vollständiger Zahnbogen realisiert ist, kann die Grenzfläche sich im Wesentlichen parallel zu Okklusionsebene erstrecken. Wenn lediglich 1 oder 2 Frontzähne realisiert werden sollen, ist es möglich, die Lage der Grenzschicht den Erfordernissen anzupassen; beispielsweise ist hier eine Schrägstellung entsprechend dem Verlauf der natürlichen Grenzschicht zwischen Zahnschmelz und Dentin möglich.

Die Grenzschicht kann bei Bedarf auch makroskopisch betrachtet strukturiert sein, beispielsweise gekrümmt und/oder gewellt, um den natürlichen Verlauf der Grenzfläche zu simulieren.

Mikroskopisch betrachtet hat die Grenzfläche bevorzugt ein Raster, also periodisch wiederkehrende Strukturen der Rundflächen, die sich in beide Erstreckungsrichtungen der beiden Schichten wiederholen.

Insofern sind erfindungsgemäß Grundelemente vorgesehen, an denen die Rundflächen ausgebildet sind. Die Grundelement können beispielsweise zwichen 0,01 mm und 3 mm groß sein, und die Radien der Rundflächen können ebenfalls in der gleichen Größenordnung sein, beispielsweise zwischen 5000 nm und 4 mm.

Erfindungsgemäß besonders günstig ist es, wenn die Grundelemente in hexagonaler Struktur, oder Bienenwaben-Struktur, angeordnet sind und harmonisch ineinander übergehen.

Die lässt sich beispielsweise durch Verschneidungen der Rundflächen miteinander realisieren, gerade dann, wenn eine Struktur aus Noppen realisiert ist, bei denen Erhöhungen und Vertiefungen einander regelmäßig abwechseln.

Die Noppen sind dann bevorzugt als Rundnoppen ausgebildet, weisen also ballige Oberseiten auf, und zwischen diesen erstrecken sich Vertiefungen oder Kanäle mit ebenfalls symmetrischen Rundflächen.

Erfindungsgemäß besonders wichtig ist es auch, dass die Rundflächen nicht nur in eine der Schichterstreckungsrichtungen, sondern in beide Schichterstreckungsrichtungen weisen. Erst dadurch entsteht der in beide Raumrichtungen sich kontinuierlich ändernde Reflexionswinkel beziehungsweise Brechungswinkel.

Versuche mit Rundflächen, die lediglich in eine Erstreckungsrichtung weisen, haben ein ästhetisch deutlich verschlechtertes Bild ergeben, das zudem vom Betrachtungswinkel des Betrachters abhängt.

Erfindungsgemäß ist es vorgesehen, dass die Höhe der Grundelemente in der gleichen Größenordnung Ihrer Größe ist, bevorzugt zwischen 10 und 60% der Größe. Dies ergibt Rundflächen mit einer Schrägstellung um 45 Grad, wobei es sich versteht, dass der Schrägstellungswinkel erfindungsgemäß in beide Raumrichtungen eine ausgesprochen breite Gausskurve ist.

Betrachtet man des Schrägstellungswinkel der Grenzfläche über die erfindungsgemäßen Erstreckungsrichtungen der Schichten, ist die Verteilung im Wesentlichen linear, mit einem Schwerpunkt bei der mittleren Schrägstellung, etwa um 30 Grad, wobei die Häufigkeitsverteilung aber auch die Endwerte wie beispielsweise 0 Grad und 60 Grad so abdeckt, dass diese mehr als die Hälfte der Häufigkeit der Maximalhäufigkeit haben.

Bevorzugt ist die Häufigkeitsverteilung der Schrägstellungswinkel in beide Raumrichtungen beider Erstreckungsrichtung im Wesentlichen gleich.

In vorteilhafter Weiterbildung der Erfindung sind 3 Schichten vorgesehen, eine Schneidematerialschicht, eine Mittelschicht und eine Dentinschicht. Hierbei ist bevorzugt die Mittelschicht näher an der Schneidenseite des Rohling als an der Dentinseite des Rohlings.

Auch wenn erfindungsgemäß die Verbindung von hochvernetzten Kunststoffen im Vordergrund steht, ist es nicht ausgeschlossen, dass durch Druck und/oder Wärme bei dem Aufeinanderfügen der Schichten trotz deren teigiger Konsistenz eine minimale Vermischung stattfindet. Diese macht den Übergang zwischen den beiden Schichten noch unschärfer, auch dann, wenn dieser Mischbereich lediglich wenige bis vielleicht 500 nm beträgt.

Anstelledessen ist es auch möglich, die Schichten aufeinander zu kleben, wobei die Klebeschicht dann beispielsweise 50000 nm dick sein kann.

Durch die erfindungsgemäß besonders gute Streuung aufgrund der unterschiedlichen Winkel beim Übergang zwischen den Schichten lässt sich auch folgender Effekt beobachten:
Der Übergang zwischen der Mittelschicht und der Dentinschicht ist an sich farbstärker und kontrastreicher als der zwischen der Schmelzmaterialschicht und der Mittelschicht. Er ist dennoch nicht oder praktisch nicht sichtbar, da die weniger tief liegende, also die vestibulärere oder okklusalere, Übergangszone, also die zwischen der Schneidemassenschicht und der Mittelschicht, insofern maskierend wirkt, so dass in der tiefer liegenden Übergangszone, also der oraler oder gingivaler liegenden Übergangszone, keine Details zu erkennen sind.

Dies gilt sogar dann, wenn der Übergang zwischen der Mittelschicht und der Schneidemasse nicht erfindungsgemäß strukturiert ist, sondern wenn dort ein glatter Übergang vorgesehen ist.

Bevorzugt sind jedoch beide Übergangszonen erfindungsgemäß mit mindestens teilweise in mehrere Erstreckungsrichtungen weisenden Rundflächen ausgestattet.

An den Rundflächen ist offenbar besonders die Krümmung um vertikale Achsen wichtig. Diese wirkt am stärksten streuend und auflösend, so dass die bereits erwähnte erfindungsgemäße Noppenstruktur bevorzugt ist.

Erfindungsgemäß ist es günstig, wenn für jeden Zahn des Fräsrohlings eine von dem Nachbarzahn getrennte Übergangszone besteht, mit einem Scheitelpunkt, der der Okklusionsebene benachbart ist und Bogenflanken, die in oraler und vestibolärer, aber auch in mesialer und distaler Richtung nach gingival fallen.

Erfindungsgemäß ist es günstig, wenn die Rundflächen an Kreissegmenten ausgebildet sind, deren Achse sich senkrecht zur Erstreckungsrichtung des Rohling erstreckt.

Erfindungsgemäß ist es günstig, wenn der Rohling flachzylindrisch und insbesondere als Kreisscheibe ausgebildet ist, mit einem Durchmesser zwischen 60 und 120 Millimeter.

Erfindungsgemäß ist es günstig, wenn wiederum aus okklusaler Richtung betrachtet die Rundflächen an horizontal geschnittenen (Halb-) Toren ausgebildet sind.

Erfindungsgemäß ist es günstig, wenn die Rundflächen in hexagonaler Struktur vorliegen, deren zentrale Torusöffnung insbesondere durch ein Kugelsegment geschlossen ist, oder deren zentrale Torusöffnung flach geschlossen ist.

Erfindungsgemäß ist es günstig, wenn die Höhe jedes Grundelements 1% bis 300% der Größe des Grundelements beträgt, insbesondere zwischen 10% und 100%.

Erfindungsgemäß ist es günstig, wenn die Grundelemente auf 10 bis 50% ihrer Größe verschnitten sind.

Erfindungsgemäß ist es günstig, wenn die Verschneidungen verrundet sind, insbesondere mit einem Verrundungsradius zwischen 0,1 mm und 1,3 mm, besonders bevorzugt zwischen 0,4 und 0,7 mm.

Erfindungsgemäß ist es günstig, wenn ein Krümmungsradius der Rundflächen 5 bis 50 %, insbesondere 15 bis 20% der Größe jedes Grundelements beträgt.

Weitere Vorteile, Einzelheiten und Merkmale ergeben sich aus der nachfolgenden Beschreibung eines Ausführungsbeispiels anhand der Zeichnung.

Es zeigen:
Fig. 1 eine teilweise aufgebrochene Seitenansicht durch einen erfindungsgemäßen Mehrfarben-Fräsrohling in einer Ausführungsform;
Fig. 1a eine vergrößerte Detaildarstellung der Ausführungsform gemäß Fig. 1;
Fig. 2 eine perspektivische Unteransicht durch den Fräsrohling gemäß Fig. 1;
Fig. 2a eine vergrößerte Detaildarstellung zu Fig. 1A, in der Draufsicht;
Fig. 3 eine schematische Darstellung von 3 Grundelementen zu der Übergangsgeometrie für den Fräsrohling gemäß einer der Figuren;
Fig. 4 eine weitere Ansicht zur Detailstruktur gemäß Fig. 3;
Fig. 5 eine vergrößerte Darstellung eines Teils eines Dentalrestaurationsteils, hergestellt aus einem erfindungsgemäßen Fräsrohling; und
Fig. 6 eine vergrößerte Darstellung zu Fig. 5.

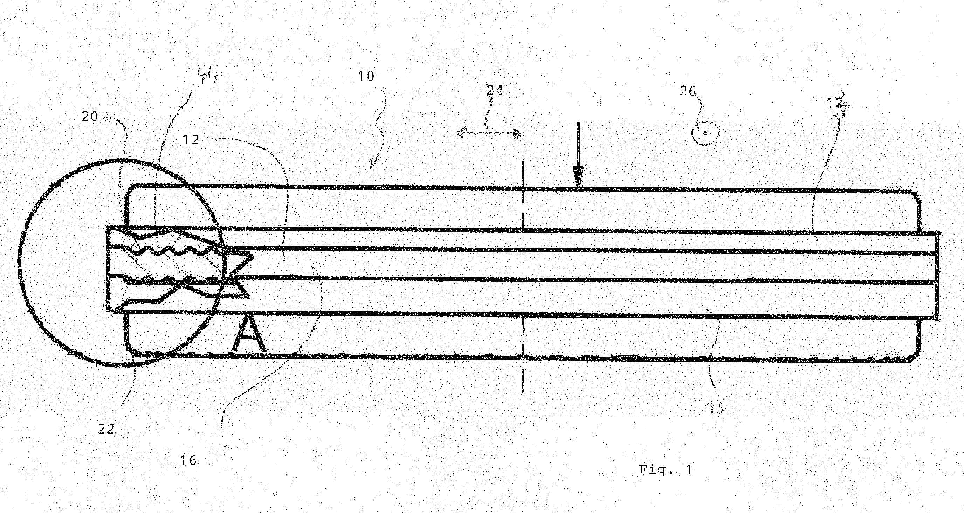

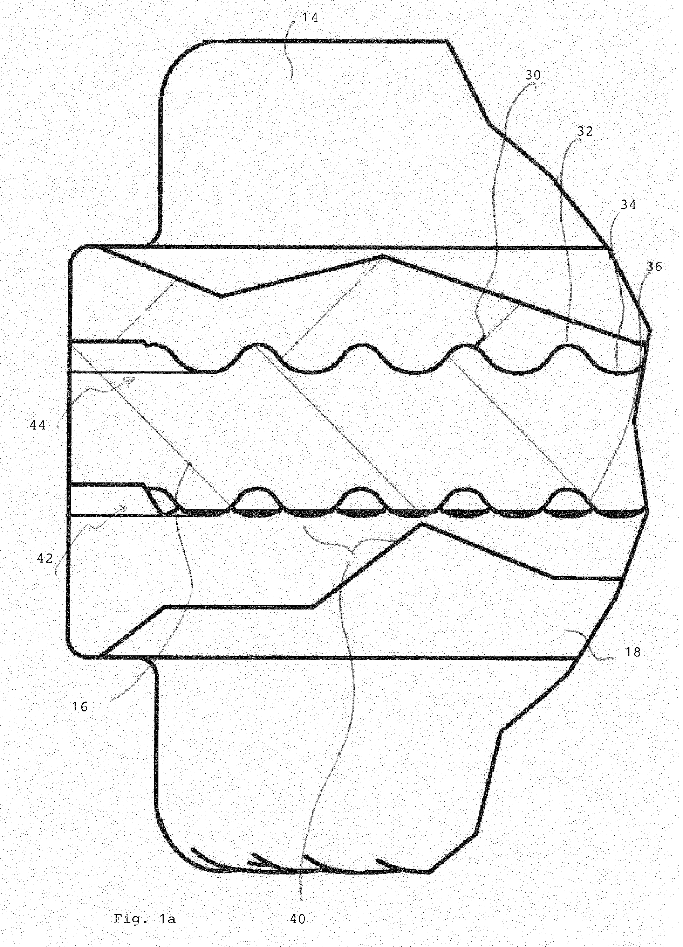

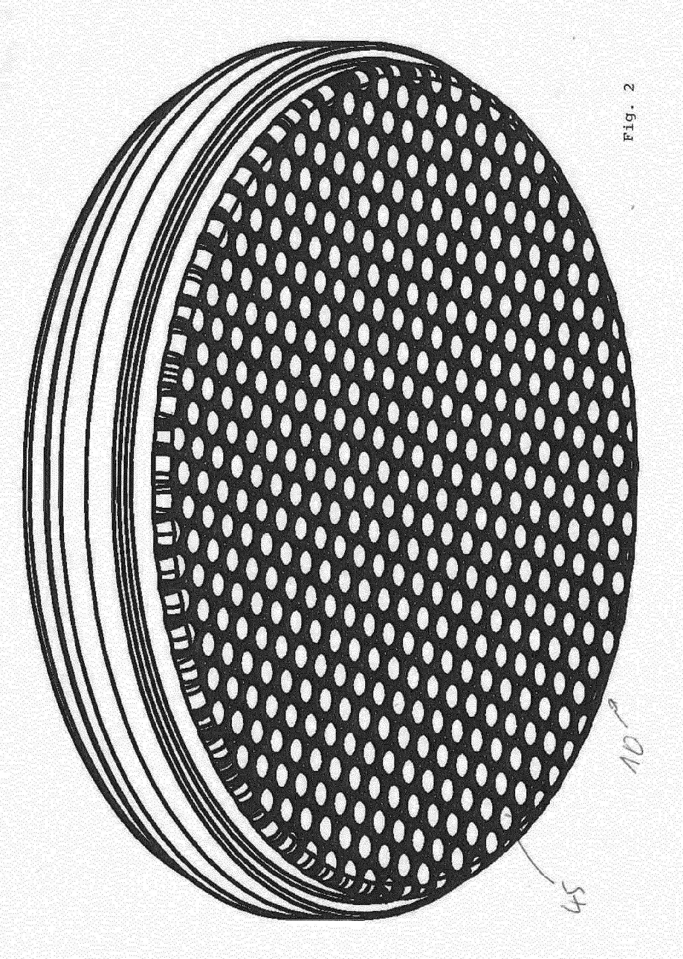

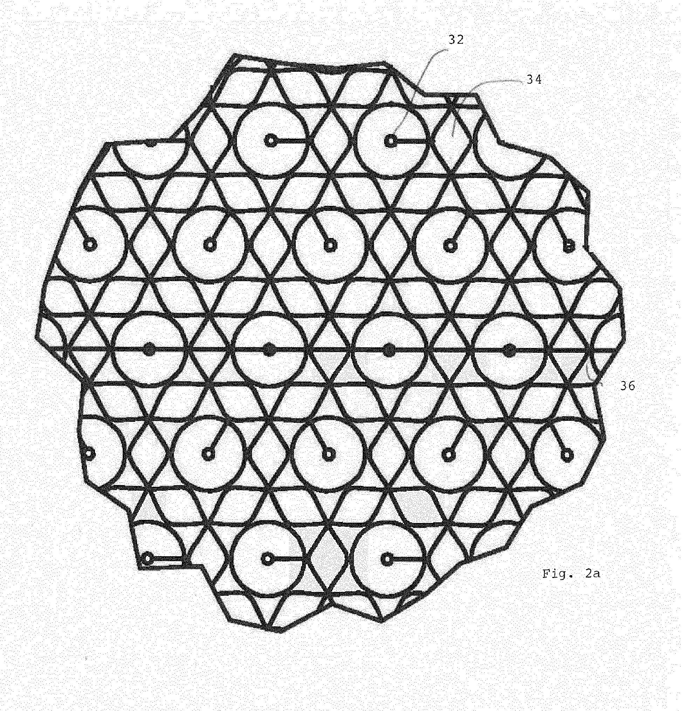

Der in den Fig. 1 und 2 dargestellte Fräsrohling 10 ist in an sich bekannter Weise scheibenförmig und hat einen Durchmesser von knapp 100 mm. Die Höhe des Fräsrohlings 10 beträgt 20 mm.

In ebenfalls an sich bekannter Weise weist er einen umlaufenden vorspringenden Rand 12 auf, der der Einspannung in einem entsprechenden Halter in der Fräsmaschine dient.

In der dargestellten Ausführungsform weist der Fräsrohling 3 Schichten auf, nämlich eine Schmelzschicht 14, eine Mittelschicht 16 und eine Dentinschicht 18. Zwischen den 3 Schichten 14 bis 18 besteht je eine Übergangszone, zwischen der Schmelzschicht 14 und 16 die Übergangszone 20 und zwischen der Mittelschicht 16 und der Dentinschicht 18 die Übergangszone 22.

Jede Übergangszone 20 und 22 hat eine spezielle erfindungsgemäße Übergangsgeometrie, die dreidimensional verläuft und erfindungsgemäß in beide Erstreckungsrichtungen weisende Rundflächen 30 hat, wie es nachstehend anhand von Fig. 1a weiter erläutert ist.

Die Erstreckungsrichtung 24 verläuft hier in X-Richtung und die die Zeichnungsebene durchtretende ist die Y-Richtung 26.

Die Übergangsgeometrie ist in beiden Übergangszonen 20 und 22 ähnlich, wobei es sich versteht, dass je nach Ausführungsbeispiel auch unterschiedliche Übergangsgeometrien, beispielsweise andere Rastermasse, realisierbar sind.

Es sind Rundflächen 30 an Bergen 32 und Tälern 34 ausgebildet. Zwischen den Bergen 32 und den Tälern 34 erstrecken sich geneigte Hänge 36, die schräg zu den beiden Erstreckungsrichtungen 24 und 26 verlaufen, jedoch insofern in die beiden Erstreckungsrichtungen 24 und 26 weisen.

Die Berge 32 sind als derartige Kuppen ausgebildet, und insofern formen sie je Noppen mit einem im Wesentlichen kreisrunden Querschnitt.

Die Täler 34 sind hingegen um die Berge 32 herum miteinander verbunden, so dass sie sich ebenfalls im Wesentlichen kreisförmig um die Berge 32 herum erstrecken.

Die Hänge 36 haben eine Hangneigung, die in der Mitte am größten ist und von der Spitze des Bergs 32 ausgehend sanft in den Tälern 34 ausläuft.

Insofern ist der Krümmungsradius der Täler 34 etwas größer als der Krümmungsradius der Berge 32.

In dem dargestellten Ausführungsbeispiel verlaufen die Berge 32 und Täler 34 in einem Raster, und jede Kombination eines Bergs 32 mit dem zugehörigen umlaufenden Tal 34 bildet ein Grundelement 40 der zugehörigen Übergangsgeometrie 44 beziehungsweise 42.

In dem dargestellten Ausführungsbeispiel beträgt das Rastermaß etwa 2,5 mm, als der Abstand der Spitzen der benachbarten Berge 32. Die Höhe, also der vertikaler Abstand zwischen Bergen 32 und Tälern 34, beträgt etwa die Hälfte des Rastermaßes.

Ferner ist in dem dargestellten Ausführungsbeispiel die Verteilung der Schichten wie folgt vorgesehen:

| | |
|---|---|
| Höhe der Schmelzmaterialschicht 14: | 8 mm |
| Höhe der Mittelschicht 16: | 3 mm |
| Höhe der Dentinschicht 18: | 9 mm |

Aus Fig. 2 ist ersichtlich, dass auch die Unterseite des Fräsrohlings 10 strukturiert ist, im Beispielsfall mit einer Noppenstruktur 45.

Eine derartige Struktur hat einen hexagonalen Grundaufbau; insofern entspricht dieser Grundaufbau einem möglichen Aufbau der Übergangsgeometrien 32 und 34, der in der Draufsicht aus Fig. 2a ersichtlich ist. Es versteht sich, dass anstelledessen auch ein beliebiger anderer, insbesondere polygonaler Grundaufbau möglich ist.

Die Übergangsgeometrien 44 und 42 sind im dargestellten Ausführungsbeispiel deckungsgleich, so dass an der Stelle, an der bei der Übergangsgeometrie 44 Berge 32 vorgesehen sind, sich solche auch in der Übergangsgeometrie 42 finden.

Es sind andere Anordnungen der Erhöhungen möglich. Z.B. ist eine Anordnung der Erhöhungen in Ringform möglich, also mit einem zentralen Ausgangspunkt und rundherum Ringe mit zunehmend grösserer Anzahl an Erhebungen. Es versteht sich, dass anstelle dessen auch ein Versatz möglich ist, der gegebenenfalls für die Reduktion von Reflexion günstig sein kann.

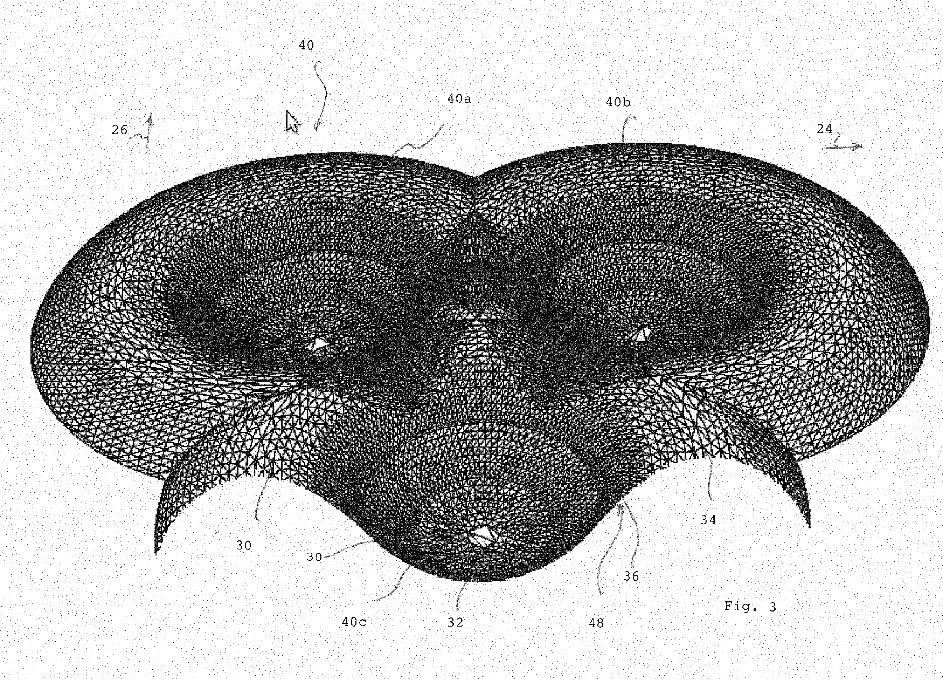

Aus Fig. 3 ist ersichtlich, in welcher Weise ein Grundelement 40 realisiert sein kann. Es sind hier zur Verdeutlichung 3 Grundelemente 40a, 40b und 40c in der Weise dargestellt, wie sie bei dem hier vorgestellten Ausführungsbeispiel ineinander übergehen.

Die Ansicht gemäß Fig. 3 entspricht der Schnittdarstellung gemäß Fig. 2a, jedoch im Grunde von schräg unten. D aher sind die Berge 32 in Fig. 3 unten und die Täler 34 in Fig. 3 oben.

Die Täler 34 umgeben je die nach unten noppenförmigen Berge 32.

Die Hänge 36 zwischen den Bergen 32 und den Tälern 34 sind bei aneinander angrenzenden Grundelementen 40 miteinander verschnitten, so dass sich sanfte Übergänge mit einer Vielzahl von Rundflächen 30 ergeben, die teils geneigt sind, teils auch eine vertikale Flächennormale haben.

Die Hänge 36 weisen schräg in die Erstreckungsrichtungen 24 und 26. Die Hangneigung nimmt von den Bergen 32 ausgehend zunächst zu und an einem Umkehrpunkt 48 dann wieder ab, bis zur Hangneigung Null an der Mitte jedes Tals 34. Die Hangneigung am Umkehrpunkt 48 beträgt hier etwa 35 Grad, wobei es sich versteht, dass die genannte Neigung in weiten Bereichen an die Erfordernisse anpassbar ist.

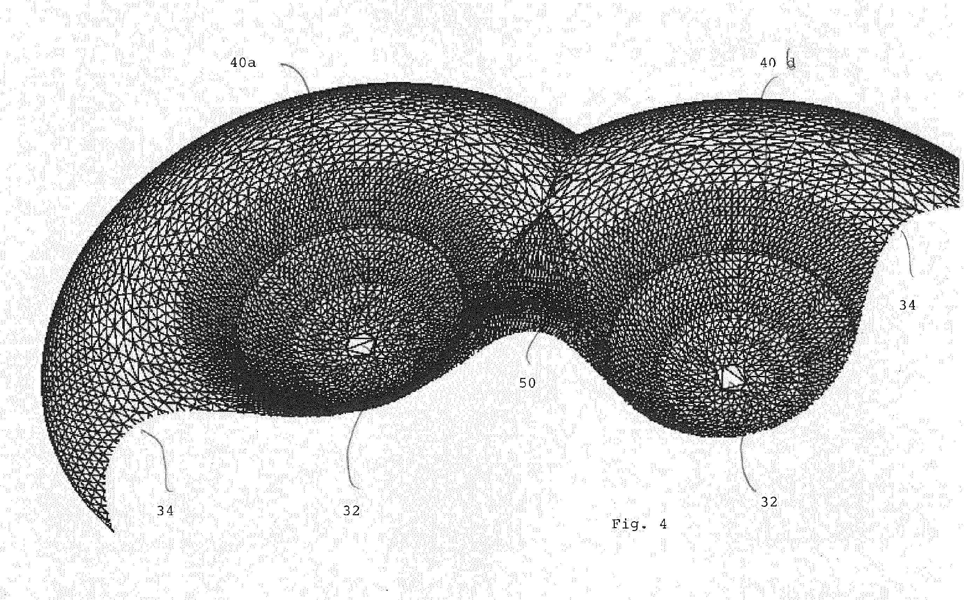

Aus Fig. 4 ist eine weitere geschnittene perspektivische Ansicht der erfindungsgemäßen Grundelemente 40a und 40b dargestellt. Die Berge 32 erstrecken sich rundkegelförmig aus den umgebenden Tälern 34. An der Übergangsstelle 50, also dem gedachten Mittelpunkt zwischen zwei Bergen 32, ist der Taleinschnitt etwas weniger tief.

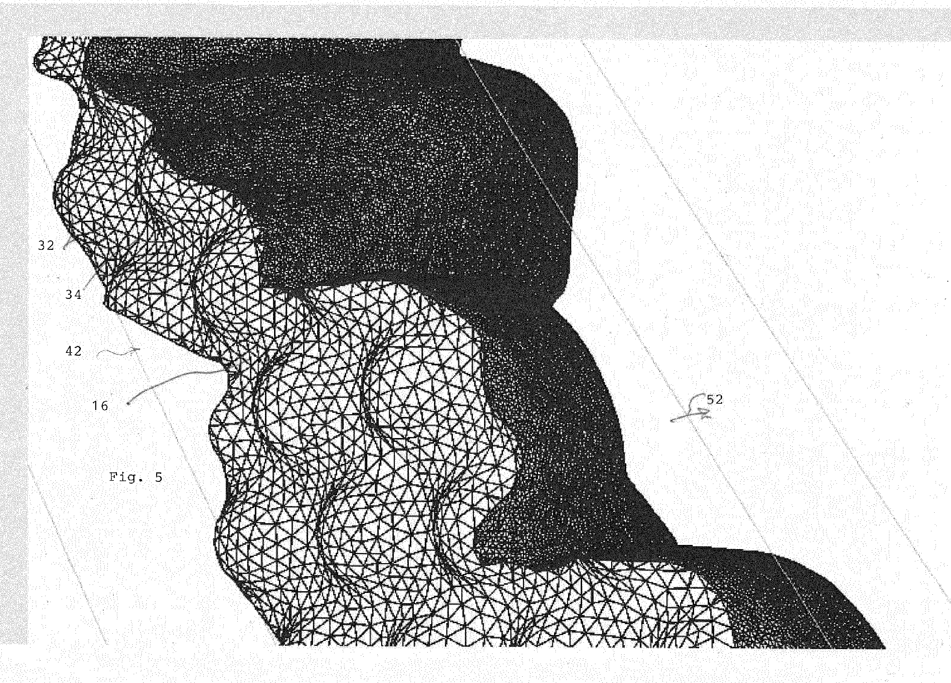

In Fig. 5 ist eine Mittelschicht 16 eines Dentalrestaurationsteils dargestellt, die die erfindungsgemäße Übergangsgeometrie 42 zu der Dentinschicht 18 hat. In okklusaler Richtung 52 erstreckt sich eine hier nicht dargestellte Schneidemassenschicht.

Wie ersichtlich ist, weisen in diesem dargestellten Ausführungsbeispiel die Berge 32 zur okklusalen Richtung 52 hin, während die Täler 34 gegenüber den Bergen 32 von der okklusalen Seite 52 weg verlagert sind.

Es versteht sich, dass anstelledessen auch eine modifizierte Ausgestaltung möglich ist, bei der die Abfolge von Bergen 32 und Tälern 34 vertauscht ist.

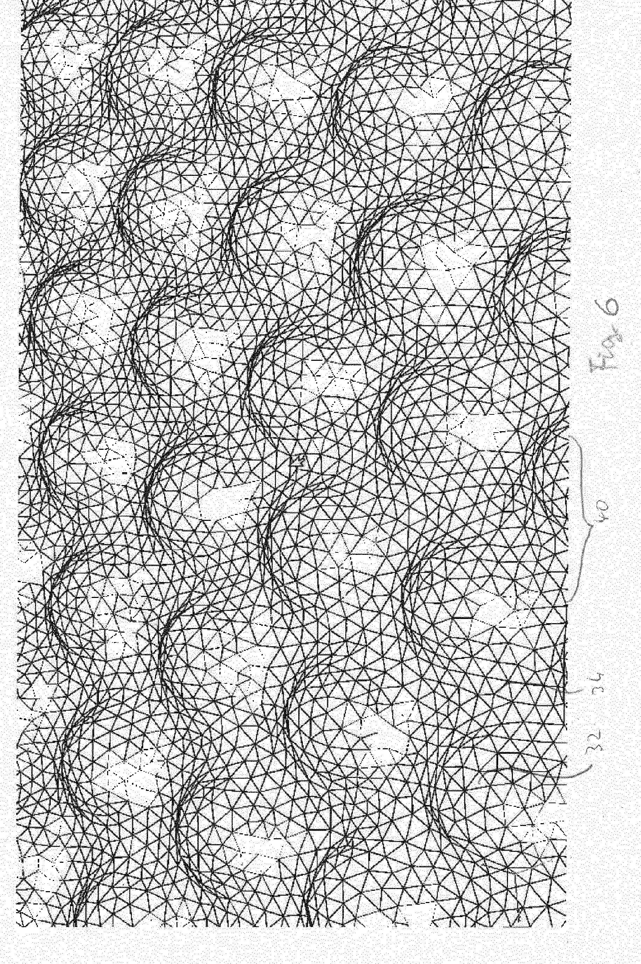

Aus Fig. 6 ist die Struktur der Berge 32 und Täler 34, die je Grundelemente 40 bilden, vergrößert dargestellt.

Es ist ersichtlich, dass die Grundstruktur der Grundelemente 40 hexagonal ist und die Grundelemente 40 sich symmetrisch zueinander erstrecken.

## Patentansprüche

1. Dentaler Mehrfarben-Fräsrohling, mit mindestens zwei Schichten mit Materialien mit unterschiedlicher Farbe, die aneinander angrenzen und miteinander fest verbunden sind, wobei zwischen diesen über mindestens einen Teil Ihrer Erstreckung eine Übergangszone (**20**) besteht, in welcher sowohl Material der ersten als auch Material der zweiten Schicht vorliegt, und wobei in dieser Übergangszone **(20)** mindestens eine Übergangsgeometrie (32) der Schichten dreidimensional verläuft, **dadurch gekennzeichnet, dass** die Übergangsgeometrie (32) Rundflächen (30) aufweist, an die sich Hänge (36) anschließen, die schräg zu beiden Erstreckungsrichtungen (24, 26), also der X-Richtung (24) und der Y-Richtung (26) der Erstreckungsebene der Schichten weisen, wobei Grundelemente vorgesehen sind, an denen die Rundflächen ausgebildet sind und die Grundelemente durch Verschneidungen der Rundflächen harmonisch ineinander übergehen und wobei die Rundflächen (30) an Noppen ausgebildet sind und wobei die Steigungen an den Rundflächen (30) weniger als 45 Grad zu den beiden Erstreckungsrichtungen (24, 26) betragen.

2. Mehrfarben-Fräsrohling nach Anspruch 1, **dadurch gekennzeichnet, dass** die Übergangszone (20) zwischen der ersten Schicht als Dentinmaterialschicht (18) und der zweiten Schicht als Schneidematerialschicht besteht und das erste Material Kunststoff-Dentinmaterial und das zweite Material Kunststoff-Schneidenmaterial ist.

3. Mehrfarben-Fräsrohling nach Anspruch 1, **dadurch gekennzeichnet, dass** das erste Material Kunststoff-Dentinmaterial, das zweite Material einer Mittelschicht (16) und die Mittelschicht (16) die zweite Schicht ist und ein drittes Material als Kunststoff-Schneidenmaterial in einer dritten Schicht vorliegt und dass die Übergangszone (20) als eine Übergangszone (20) zwischen dem Kunststoff-Dentinmaterial und dem Mittelmaterial und eine zweite Übergangszone (20) zwischen dem Mittelmaterial und dem Kunststoff-Schneidenmaterial ausgebildet ist.

4. Mehrfarben-Fräsrohling nach Anspruch 3, **dadurch gekennzeichnet, dass** mehrere Übergangszonen (20, 22) bestehen, die sich je zwischen den aneinander angrenzenden Schichten erstrecken, nämlich je eine Übergangszone (20) zwischen der Schmelzschicht (14) und der Mittelschicht (16) und eine zwischen der Mittelschicht (16) und der Dentinschicht (18), und welche Übergangszonen dreidimensional verlaufen, also nicht flach, sondern in der 3. Dimension strukturiert und insbesondere mit einer Übergangsgeometrie (32) gemäß dem kennzeichnenden Merkmal von Anspruch 1.

5. Mehrfarben-Fräsrohling nach einem der vorherigen Ansprüche, **dadurch gekennzeichnet, dass** die Flächennormalen der Rundflächen (30) der Übergangsgeometrie (32) in einem Winkel von höchstens 45 Grad zu den Erstreckungsrichtungen (24, 26) weisen.

6. Mehrfarben-Fräsrohling nach einem der vorherigen Ansprüche, **dadurch gekennzeichnet, dass** die Rundflächen (30) einen Krümmungsradius aufweisen, der insbesondere über mehr als die Hälfte jeder Rundfläche (30) konstant ist und besonders bevorzugt über die ganze Rundfläche (30).

7. Mehrfarben-Fräsrohling nach einem der vorherigen Ansprüche, **dadurch gekennzeichnet, dass** die Rundflächen (30) an Rundvertiefungen ineinander übergehen.

8. Mehrfarben-Fräsrohling nach einem der vorherigen Ansprüche, **dadurch gekennzeichnet, dass** jede Rundfläche (30) Mittelpunkt eines Grundelements ist, das über die Erstreckung der Übergangszone (20) der Schichten regelmäßig wiederkehrt, insbesondere mit einem über die gesamte Übergangszone (20) gleichbleibenden Raster.

9. Mehrfarben-Fräsrohling nach Anspruch 8, **dadurch gekennzeichnet, dass** jedes Grundelement (40) - in Richtung der Erstreckung der Schichten betrachtet - eine Größe zwischen 10.000 nm bis 3 mm aufweist.

10. Mehrfarben-Fräsrohling nach einem der Ansprüche 3 bis 9, **dadurch gekennzeichnet, dass** die erste Schicht und die zweite Schicht und insbesondere auch die dritte Schicht hinsichtlich ihrer Helligkeit und/oder ihres Chromas zueinander unterschiedlich sind und insbesondere die Dentinmaterialschicht (18) dunkler und/oder chromatischer als die weitere Schicht oder die weiteren Schichten ist.

11. Mehrfarben-Fräsrohling nach Anspruch 10, **dadurch gekennzeichnet, dass** eine dunklere und/oder chromatischere Schicht konvexe Rundflächen (30) aufweist.

12. Mehrfarben-Fräsrohling nach einem der vorherigen Ansprüche, **dadurch gekennzeichnet, dass** zwei Übergangszonen (20, 22) sich im wesentlichen parallel zueinander erstrecken und je Rundflächen (30) aufweisen, die in der einen Übergangszone (20) zur anderen Übergangszone (22) versetzt sind.

13. Dentales Mehrfarben-Restaurationsteil mit mindestens zwei Schichten mit Materialien mit unterschiedlicher Farbe, die aneinander angrenzen und miteinander durch Aneinanderfügen fest verbunden sind, wobei zwischen diesen über mindestens einen Teil Ihrer Erstreckung eine Übergangszone (20) besteht, in welcher sowohl Material der ersten als auch Material der zweiten Schicht vorliegt, und wobei in dieser Übergangszone (20) eine Übergangsgeometrie (32) der Schichten dreidimensional verläuft, **dadurch gekennzeichnet, dass** die Übergangsgeometrie (32) Rundflächen (30) aufweist, an die sich Hänge (36) anschließen, die schräg zu beiden Erstreckungsrichtungen (24, 26), also der X-Richtung (24) und der Y-Richtung (26) der Erstreckungsebene der Schichten weisen, wobei Grundelemente vorgesehen sind, an denen die Rundflächen ausgebildet sind und die Grundelemente durch Verschneidungen der Rundflächen harmonisch ineinander übergehen und wobei die Rundflächen (30) an Noppen ausgebildet sind und wobei die Steigungen an den Rundflächen (30) weniger als 45 Grad zu den beiden Erstreckungsrichtungen (24, 26) betragen.

## Claims

1. A dental multi-colored milling blank, comprising at least two layers having materials of different color which are adjacent and firmly connected to each other, wherein a transition zone (20) is provided therebetween extending across at least one portion of their extent, in which transition zone both material of the first layer and material of the second layer is present, and at least one transition geometry (32) of the layers three-dimensionally extending in said transition zone (20), **characterized in that** the transition geometry (32) comprises curved surfaces (30) to which the slopes (36) adjoin, which slopes obliquely extending in both directions of extension (24, 26), i.e. the X-direction (24) and the Y-direction (26) of the plane of extension of the layers, wherein base elements are provided on which the curved surfaces are formed, the base elements harmoniously merging into each other by overlaying the curved surfaces, the curved surfaces (30) being formed on studs and wherein the slopes on the curved surfaces (30) are less than 45 degrees.

2. The multi-colored milling blank according to claim 1, **characterized in that** the transition zone (20) between the first layer is a dentin material layer (18) and the second layer is a cutting material layer, the first material being plastic dentin material and the second material being plastic cutting material.

3. The multi-colored milling blank according to claim 1, **characterized in that** the first material is plastic dentine material, the second material is a middle layer (16) and the middle layer (16) is the second layer and a third material is present as a plastic cutting material in a third layer and **in that** the transition zone (20) is formed as a transition zone (20) between the plastic dentine material and the middle material and a second transition zone (20) between the middle material and the plastic cutting material.

4. The multi-colored milling blank according to claim 3, **characterized in that** several transition zones (20, 22) are provided, each transition zone extending between the adjacent layers, i.e. one respective transition zone (20) between the enamel layer (14) and the middle layer (16) and one between the middle layer (16) and the dentine layer (18), and which transition zones are three-dimensionally extending, i.e. they are not flat, but are structured in the 3rd dimension, and especially having a transition geometry (32) according to the characterizing feature of claim 1.

5. The multi-colored milling blank according to one of the previous claims, **characterized in that** the surface normals of the curved surfaces (30) of the transition geometry (32) are facing into the directions of extension (24, 26) at an angle of at most 45 degrees.

6. The multi-colored milling blank according to one of the previous claims, **characterized in that** the curved surfaces (30) have a radius of curvature, which is constant especially across more than half of each curved surface (30) and particularly preferably across the entire curved surface (30).

7. The multi-colored milling blank according to one of the preceding claims, **characterized in that** the curved surfaces (30) merge into each other at concave recesses.

8. The multi-colored milling blank according to one of the preceding claims, **characterized in that** each curved surface (30) is the center of a base element that regularly recurs across the extension of the transition zone (20) of the layers, thereby especially creating a grid that remains constant across the entire transition zone (20).

9. The multi-colored milling blank according to claim 8, **characterized in that** each base element (40) - as viewed in the direction of extension of the layers - has a size between 10,000 nm and 3 mm.

10. The multi-colored milling blank according to one of the claims 3 to 9, **characterized in that** the first layer and the second layer and especially also the third layer are different from each other in terms of their color and/or chroma and especially the dentine material layer (18) is darker and/or more chromatic than the other layer or layers.

11. The multi-colored milling blank according to claim 10, **characterized in that** a darker and/or more chromatic layer has surfaces that are convexly curved (30).

12. The multi-colored milling blank according to one of the previous claims, **characterized in that** two transition zones (20, 22) extend substantially parallel to each other, each having curved surfaces (30) which, in one transition zone (20), are offset with respect to the other transition zone (22).

13. A dental multi-colored restoration part having at least two layers of materials of different color, which are adjacent to and firmly connected to each other, wherein a transition zone (20) is provided therebetween extending across at least one portion of their extent, in which both material of the first layer and material of the second layer is present, and, a transition geometry (32) of the layers three-dimensionally extending in said transition zone (20), **characterized in that** the transition geometry (32) comprises curved surfaces (30) to which the slopes (36) adjoin, which slopes obliquely extending in both directions of extension (24, 26), i.e. the X-direction (24) and the Y-direction (26) of the plane of extension of the layers, wherein base elements are provided on which the curved surfaces are formed, the base elements harmoniously merging into each other by overlaying the curved surfaces, the curved surfaces (30) being formed on studs and wherein the slopes on the curved surfaces (30) are less than 45 degrees.

## Revendications

1. Lingotin de fraisage dentaire multicolore, avec au moins deux couches avec des matériaux de couleurs différentes, qui sont adjacentes l'une à l'autre et reliées solidement entre elles, où une zone de transition (20) existe entre celles-ci sur au moins une partie de leur étendue, dans laquelle se trouve aussi bien du matériau de la première couche que du matériau de la deuxième couche, et où au moins une géométrie de transition (32) des couches s'étend de manière tridimensionnelle dans cette zone de transition (20), **caractérisée en ce que** la géométrie de transition (32) présente des surfaces rondes (30), auxquelles se raccordent des pentes (36) qui sont orientées obliquement par rapport aux deux directions d'extension (24, 26), c'est-à-dire la direction X (24) et la direction Y (26) du plan d'extension des couches, où des éléments de base sont prévus sur lesquels sont formées les surfaces rondes et les éléments de base se raccordent harmonieusement les uns aux autres par des intersections des surfaces rondes, et où les surfaces rondes (30) sont formées sur des plots et les pentes sur les surfaces rondes (30) étant inférieures à 45 degrés par rapport aux deux directions d'extension (24, 26).

2. Lingotin de fraisage multicolore selon la revendication 1, **caractérisée en ce que** la zone de transition (20) est constituée entre la première couche en tant que couche de matériau dentinaire (18) et la deuxième couche en tant que couche de matériau incisif, et le premier matériau est un matériau dentinaire en plastique et le deuxième matériau est un matériau incisif en plastique.

3. Lingotin de fraisage multicolore selon la revendication 1, **caractérisée en ce que** le premier matériau est un matériau dentinaire en plastique, le deuxième matériau est une couche intermédiaire (16) et la couche intermédiaire (16) est la deuxième couche et un troisième matériau est présent en tant que matériau de coupe en plastique dans une troisième couche et **en ce que** la zone de transition (20) est réalisée sous forme d'une zone de transition (20) entre le matériau dentinaire en plastique et le matériau intermédiaire et d'une deuxième zone de transition (20) entre le matériau intermédiaire et le matériau de coupe en plastique.

4. Lingotin de fraisage multicolore selon la revendication 3, **caractérisée en ce qu'**il existe plusieurs zones de transition (20, 22) qui s'étendent chacune entre les couches contiguës, à savoir une zone de transition (20) entre la couche d'émail (14) et la couche médiane (16) et une zone de transition entre la couche médiane (16) et la couche de dentine (18), et lesquelles zones de transition s'étendent en trois dimensions, c'est-à-dire qu'elles ne sont pas plates, mais structurées dans la troisième dimension et en particulier avec une géométrie de transition (32) selon la caractéristique distinctive de la revendication 1.

5. Lingotin de fraisage multicolore selon l'une des revendications précédentes, **caractérisée en ce que** les normales aux surfaces rondes (30) de la géométrie de transition (32) forment un angle d'au plus 45 degrés avec les directions d'extension (24, 26).

6. Lingotin de fraisage multicolore selon l'une des revendications précédentes, **caractérisée en ce que** les surfaces rondes (30) présentent un rayon de courbure qui est notamment constant sur plus de la moitié de chaque surface ronde (30) et de manière particulièrement préférée sur toute la surface ronde (30).

7. Lingotin de fraisage multicolore selon l'une des revendications précédentes, **caractérisée en ce que** les surfaces rondes (30) se rejoignent au niveau de creux circulaires.

8. Lingotin de fraisage multicolore selon l'une des revendications précédentes, **caractérisée en ce que** chaque surface ronde (30) est le centre d'un élément de base qui se répète régulièrement sur l'étendue de la zone de transition (20) des couches, en particulier avec une trame constante sur toute la zone de transition (20).

9. Lingotin de fraisage multicolore selon la revendication 8, **caractérisée en ce que** chaque élément de base (40) - vu dans le sens d'extension des couches - présente une taille comprise entre 10 000 nm et 3 mm.

10. Lingotin de fraisage multicolore selon l'une des revendications 3 à 9, **caractérisée en ce que** la première couche et la deuxième couche et en particulier aussi la troisième couche sont différentes l'une de l'autre en ce qui concerne leur luminosité et/ou leur chromatisme et en particulier la couche de matériau dentine (18) est plus sombre et/ou plus chromatique que l'autre couche ou les autres couches.

11. Lingotin de fraisage multicolore selon la revendication 10, **caractérisée en ce qu'**une couche plus foncée et/ou plus chromatique présente des surfaces rondes convexes (30).

12. Lingotin de fraisage multicolore selon l'une des revendications précédentes, **caractérisée en ce que** deux zones de transition (20, 22) s'étendent sensiblement parallèlement l'une à l'autre et présentent chacune des surfaces rondes (30) qui sont décalées dans une zone de transition (20) par rapport à l'autre zone de transition (22).

13. Elément de restauration dentaire multicolore comprenant au moins deux couches avec des matériaux de couleurs différentes, qui sont adjacentes l'une à l'autre et sont reliées solidement l'une à l'autre par assemblage, où une zone de transition (20) existe entre celles-ci sur au moins une partie de leur étendue, dans laquelle se trouve aussi bien du matériau de la première couche que du matériau de la deuxième couche, et où une géométrie de transition (32) des couches s'étend en trois dimensions dans cette zone de transition (20), **caractérisé en ce que** la géométrie de transition (32) présente des surfaces rondes (30), auxquelles se raccordent des pentes (36) qui sont orientées obliquement par rapport aux deux directions d'extension (24, 26), c'est-à-dire la direction X (24) et la direction Y (26) du plan d'extension des couches, où des éléments de base sont prévus sur lesquels sont formées les surfaces rondes et les éléments de base se raccordent harmonieusement les uns aux autres par des intersections des surfaces rondes, et les surfaces rondes (30) étant formées sur des plots et où les pentes sur les surfaces rondes (30) sont inférieures à 45 degrés par rapport aux deux directions d'extension (24, 26).
